# DEMANDE DE BREVET EUROPEEN

(11) **EP 2 500 091 A1**
(43) Date de publication de la demande: **19.09.2012**
(21) Numéro de dépôt: 11158890.1
(22) Date de dépôt: 18.03.2011
(51) Int. Cl.: B01J 23/745, B01J 23/75, B01J 21/16, B01J 21/18, B01J 37/02, C01B 31/02, B82Y 30/00

(54) **COMPOSITION CATALYTIQUE POUR LA SYNTHESE DE NANOTUBES DE CARBONE**

(71) Demandeur: Nanocyl S.A., 5060 Sambreville (BE)
(72) Inventeur: Chan, Fang-Yue, BE-5000, NAMUR (BE); Amadou, Julien, BE-5640, SAINT-GERARD (BE); De Villepin, Cédric, BE-1040, ETTERBEEK (BE)
(74) Mandataire: pronovem

(57) **Abrégé**

La présente invention se rapporte à une composition catalytique pour la synthèse de nanotubes de Carbone comportant un catalyseur actif et un support catalytique, le catalyseur actif comportant un mélange de Fer et de Cobalt dans une forme d'oxydation quelconque et le support catalytique comportant de la vermiculite exfoliée.

## Description

### Objet de l'invention

La présente invention se rapporte à une composition catalytique pour la synthèse de nanotubes de Carbone et plus particulièrement une composition catalytique comportant un mélange de sites actifs de Fer et de Cobalt sur un support de vermiculite exfoliée. L'invention concerne également un procédé de synthèse pour la composition catalytique et pour les nanotubes de Carbone obtenus à l'aide de cette composition catalytique. L'invention vise également les composites polymériques comportant les nanotubes de Carbone ainsi obtenus avec leurs caractéristiques électriques améliorées.

### Etat de la technique

Les catalyseurs supportés sur vermiculite exfoliée pour la synthèse de nanotubes de Carbone sont connus de l'état de la technique. Qiang Zhang, dans son article « Mass production of aligned carbon nanotube arrays by fluidized bed catalytic chemical vapour deposition » dans CARBON 48 (2010)1196-1209 divulgue un catalyseur supporté à base de Fer-Molybdène sur vermiculite. Dans ce document la vermiculite exfoliée avait une taille de particules comprise entre 100 et 250 µm. Pour la synthèse du catalyseur supporté, cette vermiculite a été mise en suspension dans une solution aqueuse de Fe(NO₃)₃.9H₂O et de (NH₄)₆Mo₇O₂₄.4H₂O.
La synthèse de nanotubes de Carbone est effectuée selon un procédé de lit fluidisé et les rendements, qui sont relativement faibles, se situent entre 0,224 et 1,167 grammes de nanotubes de Carbone par gramme de catalyseur pour un temps de synthèse variable allant jusqu'à 30 minutes.

Flavia dans son article « Catalytic growth of carbon nanotubes and nanofibers on vermiculite to produce floatable hydrophobic « nanosponges » for oil spill remediation" divulgue également un catalyseur supporté à base de Fer, de Molybdène ou d'un mélange de Fer-Molybdène sur vermiculite exfoliée. A cette fin la vermiculite a été exfoliée à 1000°C pendant 60 secondes et imprégnée d'une solution de Fe(NO₃)₃ et de MoO₂(acac)₂ en utilisant l'eau ou le méthanol comme solvant. Seules les combinaisons Fer-Molybdène donnent lieu à une synthèse de nanotubes de Carbone.

La vermiculite est un minéral argileux hydraté à structure lamellaire de silicates d'Aluminium, de Fer et de Magnésium ressemblant à des muscovites comme le mica et lorsqu'ils sont soumis à de la chaleur s'exfolient en fonction de la vapeur générée entre les lamelles. La vermiculite est inerte et non combustible, elle a une température de fusion aux alentours de 1300 °C et un poids volumique entre 40 et 80 g/l lorsqu'elle est exfoliée.

Le document US3062753 A et le document US5879600 divulguent des méthodes d'exfoliation de la vermiculite et le document US7541311 divulgue un catalyseur utilisant de la vermiculite. Les informations sur la vermiculite contenues dans ces trois documents sont incorporées par référence au présent document.

### Buts de l'invention

La présente invention vise à fournir une composition catalytique améliorée permettant la synthèse de nanotubes de Carbone avec des caractéristiques particulières.

Elle vise aussi à fournir une méthode de synthèse de nanotubes de Carbone à l'aide dudit catalyseur.

L'invention vise enfin à divulguer des composites polymériques avec des propriétés physiques améliorées et obtenues grâce aux nanotubes de Carbone synthétisés à l'aide de la composition catalytique selon l'invention.

### Résumé de l'invention

La présente invention divulgue une composition catalytique pour la synthèse de nanotubes de Carbone comportant un catalyseur actif et un support catalytique, le catalyseur actif comportant un mélange de Fer et de Cobalt dans une forme d'oxydation quelconque et le support catalytique comportant de la vermiculite exfoliée.

Les modes d'exécution particuliers de la présente invention comportent au moins une ou une combinaison appropriée des caractéristiques suivantes :
- dans la composition catalytique, la proportion molaire de Cobalt et de Fer (Co/Fe) est comprise entre 0,1 et 2, de préférence entre 0,25 et 1,5 ;
- dans la composition catalytique le pourcentage en poids du catalyseur actif par rapport à la composition catalytique est compris entre 1,5 et 20% et de préférence entre 2,2 et 12%, de manière particulièrement préférée entre 2,2 et 8%;
- dans la composition catalytique la vermiculite exfoliée a une taille de particules comprise entre 50 et 1000 µm, de préférence entre 500 et 1000 µm ;

La présente invention divulgue également un procédé de synthèse de la composition catalytique selon l'invention comportant les étapes suivantes :
- exfoliation de la vermiculite par traitement d'un minerai de vermiculite à une température supérieure à 800 °C;
- mise en contact de la vermiculite exfoliée avec une solution d'un sel de Cobalt et de Fer;
- calcination de la vermiculite mise en contact avec une solution d'un sel de Cobalt et de Fer à une température supérieure à 350°C.

Selon des modes particuliers, le procédé comporte au moins une ou une combinaison appropriée des caractéristiques suivantes :
- dans le procédé le sel de Fer est le Fe(NO₃)₃.9H₂O ;
- dans le procédé le sel de Cobalt est le Co(OAc)₂.4H₂O ;
- dans le procédé la mise en contact de la vermiculite exfoliée avec une solution d'un sel de Cobalt et de Fer se fait par imprégnation à l'aide d'une solution aqueuse;

La présente invention divulgue également un procédé de synthèse de nanotubes de Carbone par décomposition d'un hydrocarbure gazeux sur une composition catalytique selon l'invention comportant les étapes suivantes :
- conditionnement de la composition catalytique sous atmosphère inerte;
- mise en contact de la composition catalytique avec une source de Carbone gazeuse à une température entre 600 et 800 °C durant au moins 5 minutes.

Selon un mode particulier du procédé de synthèse de nanotubes de Carbone, l'alimentation en composition catalytique et l'extraction de nanotubes de Carbone synthétisés est continue.

La présente invention divulgue également des composites polymériques comportant des nanotubes de Carbone obtenus selon le procédé de l'invention.

### Brève description des figures

La figure 1 montre l'influence du volume d'imprégnation d'eau sur le rendement de la composition catalytique en gardant le rapport molaire Co/Fe et le pourcentage métallique constants.

La figure 2 montre l'influence du rapport Co/Fe sur le rendement du catalyseur. Une série de 10 catalyseurs a été préparée en gardant un taux de 4% de métaux.

La figure 3 montre l'influence du pourcentage de métaux sur le rendement du catalyseur.

La figure 4 montre l'influence du temps de synthèse sur le rendement du catalyseur (un plateau est atteint après 25 minutes).

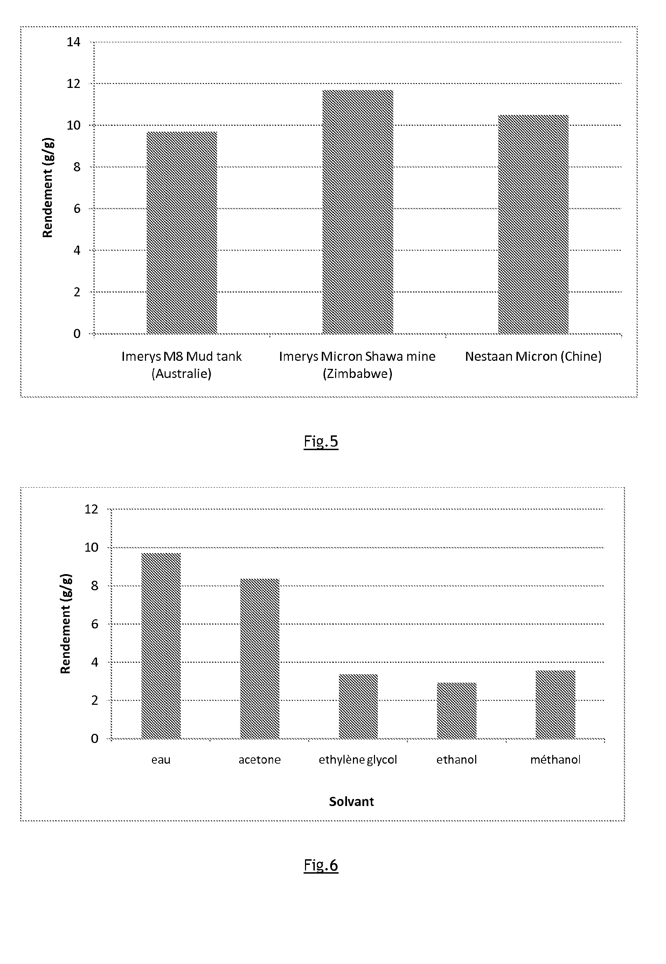

La figure 5 montre l'influence du type de vermiculite sur le rendement du catalyseur.

La figure 6 montre l'influence du type de solvant utilisé pour dissoudre les sels métalliques sur le rendement du catalyseur.

La figure 7 montre la résistivité volumique d'un composite de polycarbonate (Makrolon 2205-Bayer) comportant différentes concentrations en nanotubes de Carbone obtenus par divers procédés de synthèse dont les nanotubes de Carbone obtenus par synthèse catalytique sur support de vermiculite selon l'invention.

La figure 8 montre la résistivité de surface d'un composite de polycarbonate comportant différentes concentrations en nanotubes de Carbone obtenus par divers procédés de synthèse dont les nanotubes de Carbone obtenus par synthèse catalytique sur support de vermiculite selon l'invention.

La figure 9 montre la résistivité de surface et la figure 10 montre la résistivité volumique d'un composite de polysiloxane (VQM 809+ crosslinker 100+ Catalyst 510 + inhibiteur 600- Hanse Chemie) comportant différentes concentrations en nanotubes de Carbone obtenus par divers procédés de synthèse dont les nanotubes de Carbone obtenus par synthèse catalytique sur support de vermiculite selon l'invention.

La figure 11 montre la résistivité de surface d'un composite d'une résine époxy (Epikote 828- Hexion) comportant différentes concentrations en nanotubes de Carbone obtenus par divers procédés de synthèse dont les nanotubes de Carbone obtenus par synthèse catalytique sur support de vermiculite selon l'invention.

### Description détaillée de l'invention

L'invention consiste à réaliser une composition catalytique avec un catalyseur actif et un support catalytique, le catalyseur actif comportant un mélange de Cobalt et de Fer sur support catalytique comprenant de la vermiculite exfoliée. Cette composition catalytique permet d'obtenir des nanotubes de Carbone qui, lorsqu'ils sont dispersés dans des matrices polymériques, procurent un niveau de conductivité électrique élevé avec des faibles concentrations en nanotubes de Carbone. L'invention décrit également une méthode de synthèse de la composition catalytique.

La méthode de préparation de la composition catalytique comprend les étapes suivantes :
- exfoliation de la vermiculite par traitement d'un minerai de vermiculite à une température supérieure à 800 °C;
- imprégnation de la vermiculite exfoliée par une solution d'un sel de Cobalt et de Fer.
- calcination de la vermiculite imprégnée sous atmosphère inerte à une température supérieure à 350°C.

### Exemple de synthèse de la composition catalytique

1) Exfoliation de la vermiculite par traitement d'un minerai de vermiculite (Imerys, Shawa mine Zimbabwe) à 900°C pendant 2 minutes sous azote puis laisser refroidir jusqu'à température ambiante.
2) Préparation d'une solution de sels métalliques : on pèse 1,14 g de Fe(NO₃)₃.9H₂O et 0,35 g de Co(OAc)₂.4H₂O que l'on dissout dans 10 ml d'eau.
3) Imprégnation : On verse la solution dans 6 g de vermiculite exfoliée. On mélange à la spatule pour homogénéiser. On laisse l'imprégnation agir pendant environ 1 nuit.
4) Séchage/calcination : Le mélange est calciné sous azote selon un programme de température composé d'une montée rapide en température jusque 400°C, suivie d'un palier durant 1h puis un refroidissement.

### Exemple de synthèse des nanotubes de Carbone

1) On pèse 1 g de catalyseur que l'on éparpille sur une barquette.
2) On place la barquette dans la zone froide du réacteur. On place le bouchon du tube en quartz et on fait passer un flux de 2 l/min d'azote pendant 6 min.
3) On fait passer un mélange azote, éthylène et hydrogène avec respectivement des flux de 0,857 l/min, 1,744 l/min et 0,286 l/min. On attend 6 min pour que les concentrations dans le réacteur se stabilisent.
4) On introduit la barquette dans la zone chaude du réacteur, préalablement réglée à 700°C. On laisse réagir 20 min.
5) On arrête les gaz et on introduit un flux de 2 l/min d'azote. On place la barquette dans la zone froide. On laisse la barquette refroidir pendant 6 min. On ouvre le bouchon et on récolte les nanotubes.
Après avoir synthétisé les nanotubes de Carbone à l'aide de la composition catalytique selon l'invention, on disperse ceux-ci par des moyens classiques dans des matrices polymériques variées.

### Exemple de dispersion de nanotubes de Carbone dans une matrice de polycarbonate

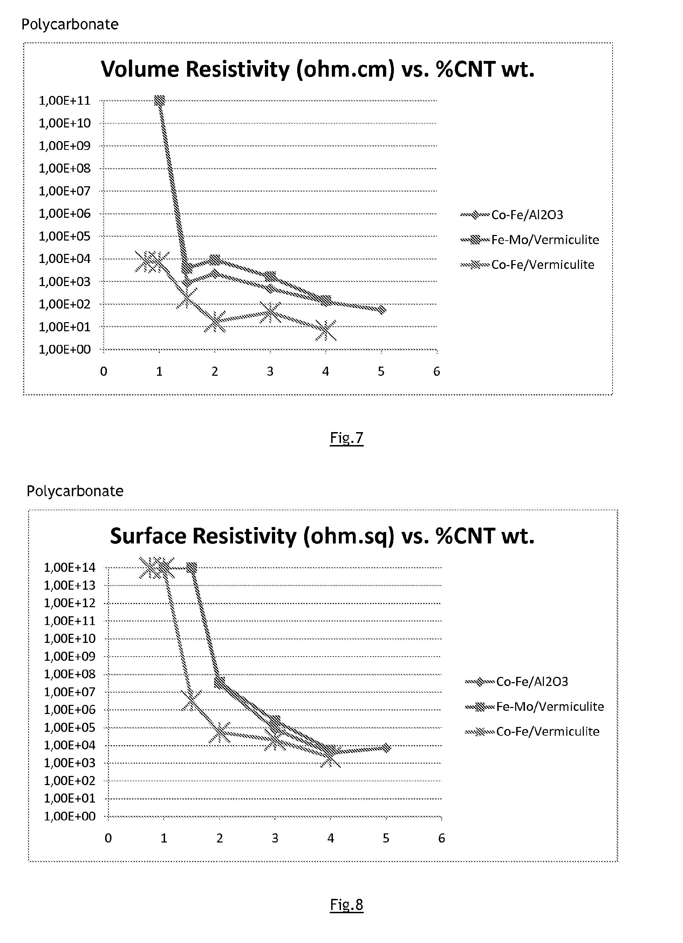

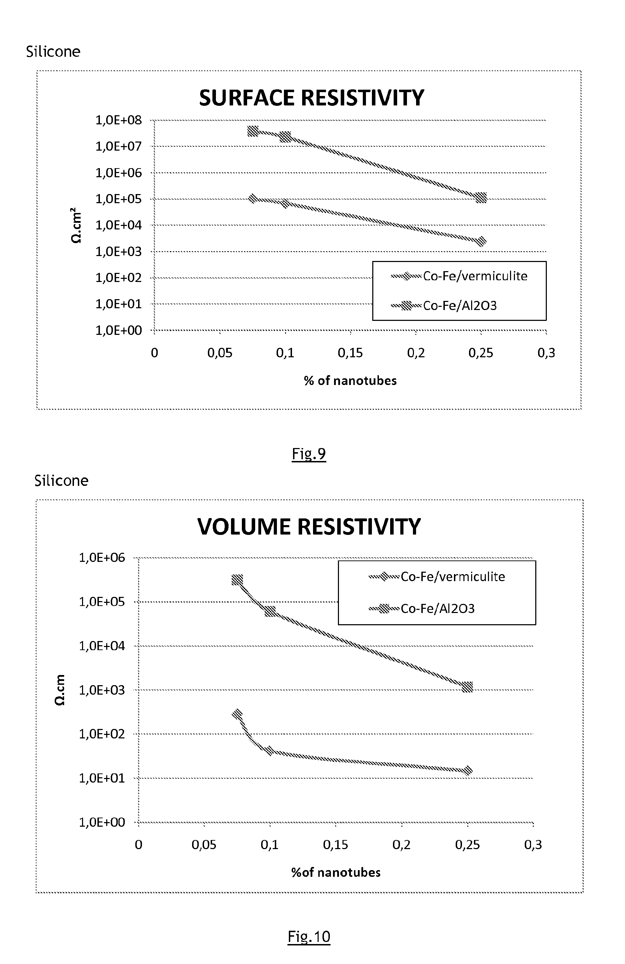

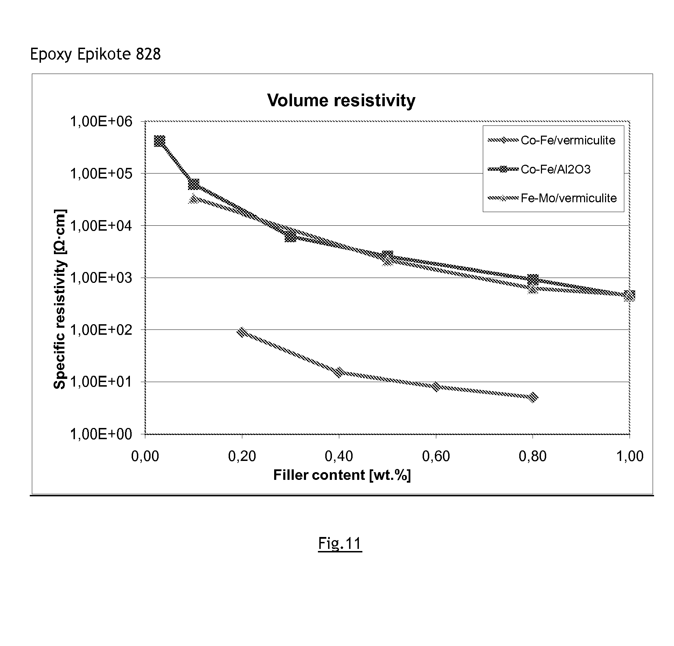

On prépare des mélanges de 12,5 g contenant respectivement 0,75%, 1%, 1,5%, 2%, 3%, 4% de fraction massique en nanotubes de Carbone dans une matrice de polycarbonate PC2205.
Les différents mélanges sont passés dans une microextrudeuse bi-vis corotative de type DSM Xplore 15 cm³. Le mélange est opéré à 280°C, 50 RPM pendant 5 minutes.
Le mélange fondu est ensuite injecté par une micro-injecteuse de type DSM Xplore 12 cm³ dont la chambre du piston est chauffée à 280°C et le moule à 100°C. L'injection est faite avec une pression de 8 barG pendant 2 s, suivis d'une montée à 12 barG sur 8 sec. et finalement un maintien de 12 barG pendant 4 sec. Le moule est un moule IZOD à 2 barreaux.
Les extrémités des barreaux sont sciées sur 3 mm.
De la peinture d'argent est appliquée sur les extrémités des barreaux et on effectue la mesure de résistivité volumique 2 points avec un multimètre de type Keithley 2700.
De la peinture d'argent est appliquée en 2 bandes séparées de 1 cm et on effectue la mesure de résistivité surfacique 2 points avec un multimètre de type Keithley 2700. Les résultats de ces mesures sont illustrés dans les figures 7 à 11.

**Influence de différents paramètres sur le rendement de la composition catalytique selon l'invention**

### EXEMPLES

### A) Le rapport Co/Fe

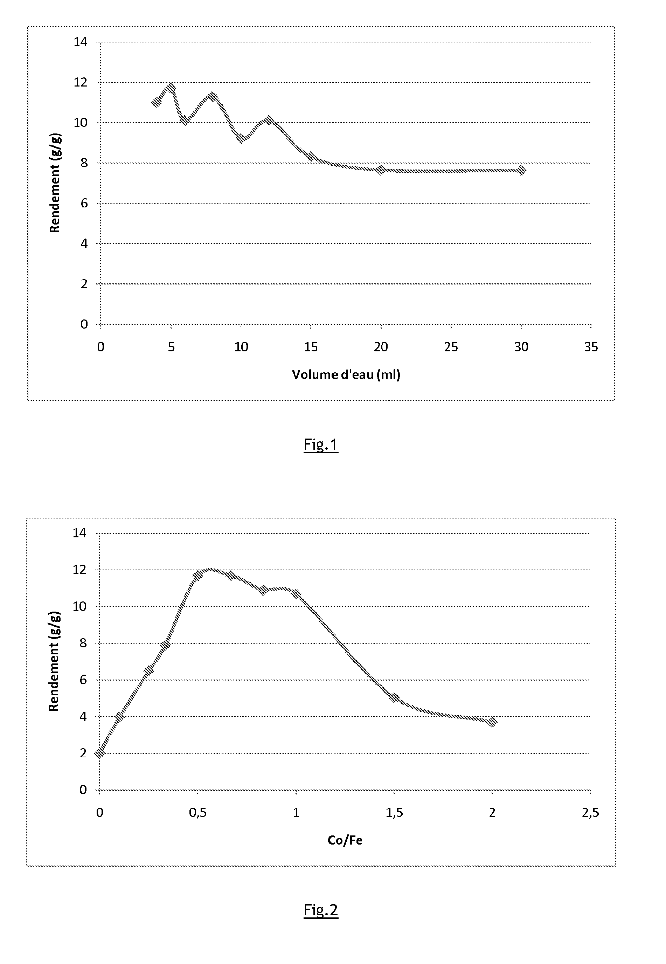

La figure 2 montre différents rapports Co/Fe. Une productivité maximale est atteinte avec un rapport d'environ 0,5 à 0,66.

### Conditions de préparation

| Support | Métaux | Imprégnation | calcination |
|---|---|---|---|
| 6 g Imerys Vermiculite, Shawa Mine Zimbabwe, Micron | Fe(NO₃)₃.9H₂O | Volume d'eau : 8 ml | 400°C |
| Tamisé (>500 µm) | Co(OAc)₂.4H₂O | Repos : 16 h | 1 h |
| Exfolié 2 min à 900°C sous 2 l/min de N₂ | Rapport mol. Co/Fe variable | | 1 m³/h N₂ |
| | %_{massique} métal = 4,0% | | |

### Résultats

| Catalyseur | Masse de Co(OAc)₂.4H₂O | Masse de Fe(NO₃)₃.9H₂O | Rapport molaire Co/Fe | Rendement (g/g) |
|---|---|---|---|---|
| 137 | 0,35 | 1,14 | 1/2 | 11,7 |
| 138 | 0,26 | 1,28 | 1/3 | 7,9 |
| 139 | 0,53 | 0,86 | 1/1 | 10,7 |
| 185 | 0,63 | 0,69 | 3/2 | 5,04 |
| 143 | 0,42 | 1,03 | 2/3 | 11,7 |
| 144 | 0,48 | 0,94 | 5/6 | 10,9 |
| 177 | 0,34 | 0,28 | 2/1 | 3,7 |
| 178 | 0,11 | 0,69 | 1/4 | 6,5 |
| 235 | 0,1 | 1,57 | 1/10 | 3,99 |
| 193 | 0 | 1,74 | 0/1 | 2,0 |

### B) Le pourcentage de métal dans la composition catalytique

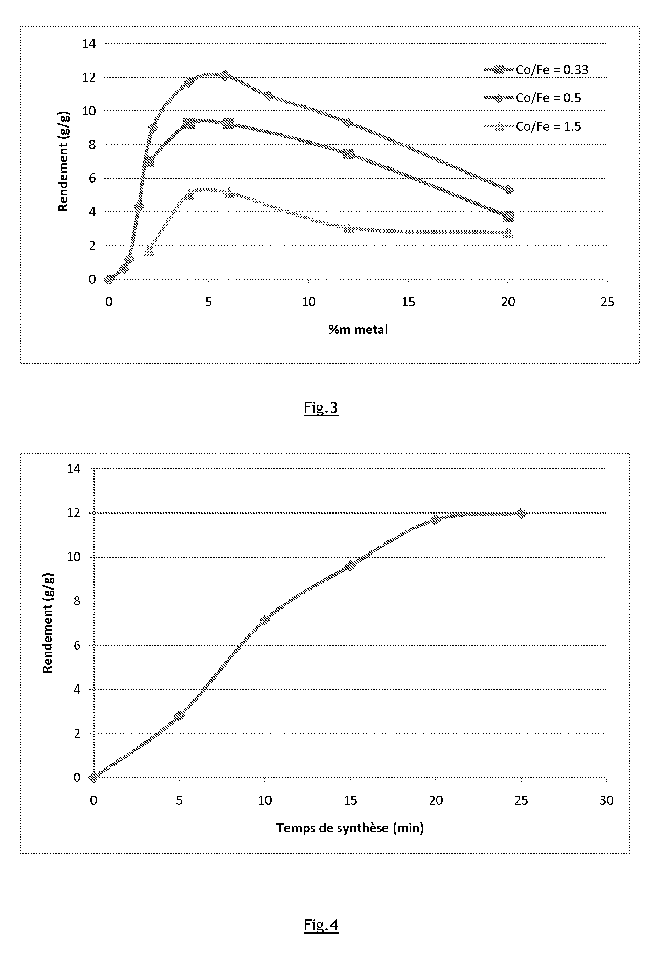

Trois séries de catalyseurs ont été préparées. Les séries avec le rapport constant Co/Fe = 0,333 et Co/Fe = 1,5 comportent 4 points. La série avec le rapport constant Co/Fe = 0,5 comporte 9 points. Les courbes de la figure 3 montrent qu'un pourcentage de métal aux alentours de 5% donne le meilleur rendement dans la composition catalytique quelque soit le rapport Co/Fe.

### Conditions de préparation

| Support | Métaux | Imprégnation | calcination |
|---|---|---|---|
| 6 g Imerys Vermiculite, Shawa Mine Zimbabwe, | Fe(NO₃)₃.9H₂O Co(OAc)₂.4H₂O | Volume d'eau : 8 ml | 400°C |
| Micron Tamisé (>500 µm) | Rapport molaire Co/Fe : 0,33 ; 0,5 et 1,5 | Repos : 16 h | 1 h |
| Exfolié 2 min à 900°C sous 2 l/min de N₂ | %_{massique} métal = variable de 0,74 à 20. | | 1 m³/h N₂ |

### Résultats

| Catalyseur | Masse de Co(OAc)₂.4H₂O | Masse de Fe(NO₃)₃.9H₂O | %_{massique} métal | Rapport molaire Co/Fe | Rendement (g/g) |
|---|---|---|---|---|---|
| 146 | 0,064 | 0,21 | 0,74 | 0,5 | 0,64 |
| 195 | 0,086 | 0,284 | 1 | 0,5 | 1,2 |
| 194 | 0,132 | 0,426 | 1,5 | 0,5 | 4,31 |
| 142 | 0,19 | 0,62 | 2,2 | 0,5 | 9 |
| 137 | 0,35 | 1,14 | 4 | 0,5 | 11,7 |
| 141 | 0,51 | 1,66 | 5,8 | 0,5 | 12,1 |
| 182 | 0,7 | 2,274 | 8 | 0,5 | 10,9 |
| 183 | 1,052 | 3,41 | 12 | 0,5 | 9,3 |
| 196 | 1,752 | 5,682 | 20 | 0,5 | 5,31 |
| 184 | 0,31 | 0,336 | 2 | 1,5 | 1,72 |
| 185 | 0,622 | 0,672 | 4 | 1,5 | 5,04 |
| 186 | 0,932 | 1,008 | 6 | 1,5 | 5,13 |
| 187 | 1,864 | 2,016 | 12 | 1,5 | 3,07 |
| 234 | 3,10 | 3,66 | 20 | 1,54 | 2,76 |
| 188 | 0,132 | 0,642 | 2 | 0,33 | 7,01 |
| 189 | 0,264 | 1,284 | 4 | 0,33 | 9,26 |
| 190 | 0,396 | 1,926 | 6 | 0,33 | 9,24 |
| 191 | 0,792 | 3,854 | 12 | 0,33 | 7,44 |
| 233 | 1,32 | 6,42 | 20 | 0,33 | 3,74 |

### C) Le type de vermiculite

Une série de 3 catalyseurs a été préparée à partir de 3 vermiculites de provenance différente. Les vermiculites Imerys et Nestaan ont été exfoliés thermiquement à environ 900 °C sous azote. Le tamisage a également été nécessaire pour enlever les impuretés (>500 µm). Les résultats montrent que l'origine de la vermiculite a peu d'influence sur le rendement du catalyseur.

### Conditions de préparation

| Métaux | Imprégnation | calcination |
|---|---|---|
| 1.14 g Fe(NO₃)₃.9H₂O | Volume d'eau : 5 ml | 400°C |
| 0.35 g Co(OAc)₂.4H₂O | Repos : 16 h | 1 h |
| Rapport molaire Fe/Co = 2/1 %_{massique} métal = 4,0% | | 1 m³/h N₂ |

### Résultats

| Catalyseur | Fournisseur | Grade | Origine | Préparation | Rendement (g/g) |
|---|---|---|---|---|---|
| 173 | Imerys | M8 | Mud tank (Australie) | tamisée (>500 µm), exfoliée à 900°C sous N₂ | 9,7 |
| 137 | Imerys | Micron | Shawa mine (Zimbabwe) | tamisée (>500 µm), exfoliée à 900°C sous N₂ | 11,7 |
| 169 | Nestaan | Micron | (Chine) | déjà exfoliée | 10,5 |

### D) Le temps de synthèse

Dans la figure 4 on voit clairement qu'après 25 minutes un plateau de rendement est atteint.

### Conditions de préparation

| Support | Métaux | Imprégnation | calcination |
|---|---|---|---|
| 6 g Imerys Vermiculite, Shawa Mine Zimbabwe, | 1,03 g Fe(NO₃)₃.9H₂O 0,42 g Co(OAc)₂.4H₂O | Volume d'eau : 8 ml | 400°C |
| Micron Tamisé (>500 µm) | Rapport molaire Co/Fe : 0,66 | Repos : 16 h | 1 h |
| Exfolié 2 min à 900°C sous 2 l/min de N₂ | %_{massique} métal = 4,0% | | 1 m³/h N₂ |

### Résultats

| Catalyseur | Temps de synthèse (min) | Rendement (g/g) |
|---|---|---|
| | 10 | 7,13 |
| 143 | 15 | 9,61 |
| | 20 | 11,69 |
| | 25 | 11,98 |

### E) L'influence du type de solvant

5 catalyseurs ont été préparés à partir de 5 solvants différents. La vermiculite utilisée est celle provenant d'Australie.

### Conditions de préparation

| Support | Métaux | Imprégnation | calcination |
|---|---|---|---|
| 6 g Imerys Vermiculite, Mud Tank Mine (Autralie) | 1,14 g Fe(NO₃)₃.9H₂O 0,35 g Co(OAc)₂.4H₂O | Volume de solvant : 5 ml | 400°C |
| Tamisé (>500 µm) | Rapport molaire | Repos : 16 h | 1 h |
| Exfolié 2 min à 900°C sous 2 l/min de N₂ | Fe/Co = 2/1 %_{massique} métal = 4,0% | | 1 m³/h N₂ |

### Résultats

| Catalyseur | Solvant | Rendement (g/g) |
|---|---|---|
| 173 | Eau | 9,7 |
| 174 | Acétone | 8,37 |
| 200 | Ethylène glycol | 3,37 |
| 231 | Ethanol | 2,94 |
| 232 | Méthanol | 3,58 |

Les résultats montrent que le solvant a une influence sur le rendement du catalyseur. Bien que l'eau soit dans ce cas précis le meilleur solvant, un solvant organique tel que l'acétone peut également donner un catalyseur à haut rendement.

Par ailleurs, un catalyseur supplémentaire a été préparé avec 1,14 g Fe(NO₃)₃.9H₂O et 0,41 g Co(NO₃)₂.6H₂O (rapport Co/Fe = 0.5) dans 5 ml d'acétone. Celui-ci a donné un rendement de 5,83 g/g. Ceci montre qu'une bonne combinaison solvant-sels peut parfois être nécessaire pour avoir un catalyseur à haut rendement.

### F) Le volume d'imprégnation d'eau

Pour déterminer la limite entre une imprégnation et une méthode de mise en suspension, différents volumes d'eau ont été testés (voir figure 1)

### Conditions de préparation de la composition catalytique

| Support | Métaux | Imprégnation | calcination |
|---|---|---|---|
| 6 g Imerys Vermiculite, Shawa Mine Zimbabwe, | 1,14 g Fe(NO₃)₃.9H₂O 0,35 g C_{O}(OAc)₂.4H₂O | Volume d'eau : variable de 4 à 30 ml | 400°C 1 h |
| Micron, tamisé (>500 µm) | Rapport molaire Fe/Co = | Repos : 16 h | 1 m³/h N₂ |
| Exfolié 2 min à 900 °C sous | 2/1 | | |
| 2 l/min de N₂ | %_{massique} métal = 4,0% | | |

### Résultats

| N° catalyseur | Volume d'eau (ml) | Rendement (g/g) |
|---|---|---|
| 114 | 10 | 9,2 |
| 134 | 8 | 11,3 |
| 135 | 12 | 10,1 |
| 137 | 5 | 11,7 |
| 138 | 8 | 7,9 |
| 145 | 4 | 11,0 |
| 179 | 15 | 8,3 |
| 180 | 20 | 7,6 |
| 181 | 30 | 7,6 |

L'imprégnation peut-être considérée comme « sèche » lorsque le volume d'eau est inférieur à 10 ml pour 6 g de vermiculite. Au-delà de ce volume, la vermiculite est baignée dans la solution métallique et, lors du séchage, un dépôt de métaux peut se faire sur les parois du récipient. Cette perte de métaux se traduit par une diminution du rendement. Le seuil de volume d'eau peut cependant dépendre de la granulométrie de la vermiculite utilisée.

### Procédé par filtration par rapport au procédé par infiltration

Une série de 4 catalyseurs a également été préparée par la méthode des articles de Zhang *et al.* c'est-à-dire par suspension-filtration, en utilisant les meilleures sels métalliques (Fe(NO₃)₃.9H₂O et Co(OAc)₂.4H₂O) et le meilleur rapport Co/Fe (1 /2).

### Conditions de préparation

6 g de vermiculite Nestaan micron sont placés dans un Erlenmeyer. On y ajoute de l'eau et un agitateur magnétique. Le mélange est mis sous agitation à 80 °C pendant 6 h pour créer une suspension. On y ajoute une solution aqueuse de Fe(NO₃).9H₂O et de Co(OAc)₂.4H₂O. On filtre le mélange à l'aide d'un fritté sous vide. La pâte obtenue est calcinée à 400 °C sous azote pendant 1 h. 2 volumes d'eau ainsi que 2 quantités de sels métalliques sont utilisés.

| Masse de sels métalliques | H2O (ml) | Rendement (g/g) |
|---|---|---|
| 1,14 g Fe(NO₃)₃.9H₂O + 0,35 g Co(OAc)₂.4H₂O | 50 | 1,0 |
| 1,14 g Fe(NO₃)₃.9H₂O + 0,35 g Co(OAc)₂.4H₂O | 100 | 0,16 |
| 4,54 g Fe(NO₃)₃.9H₂O + 1,40 g Co(OAc)₂.4H₂O | 50 | 11,9 |
| 4,54 g Fe(NO₃)₃.9H₂O + 1,40 g Co(OAc)₂.4H₂O | 100 | 7,2 |

On peut voir que cette méthode de préparation peut donner lieu à des catalyseurs actifs à rendement élevé à condition d'avoir des solutions métalliques assez concentrées, elle présente néanmoins quelques difficultés comparées à la méthode par imprégnation sèche :
- on contrôle difficilement le taux de métaux déposés sur la vermiculite qui dépend de la qualité de filtration ;
- le temps de préparation est très long, notamment pour la mise en suspension et la filtration ;
- cette méthode demande une plus grande quantité de sels métalliques, une bonne partie est perdue dans le filtrat.

## Revendications

1. Composition catalytique pour la synthèse de nanotubes de Carbone comportant un catalyseur actif et un support catalytique, le catalyseur actif comportant un mélange de Fer et de Cobalt dans une forme d'oxydation quelconque et le support catalytique comportant de la vermiculite exfoliée.

2. Composition catalytique selon la revendication 1 **caractérisée en ce que** la proportion molaire de Cobalt et de Fer (Co/Fe) est comprise entre 0,1 et 2, de préférence entre 0,25 et 1,5.

3. Composition catalytique selon l'une quelconque des revendications précédentes **caractérisée en ce que** le pourcentage en poids du catalyseur actif par rapport à la composition catalytique est compris entre 1,5 et 20% et de préférence entre 2,2 et 12%, de manière particulièrement préférée entre 2,2 et 8%.

4. Composition catalytique selon l'une quelconque des revendications précédentes **caractérisée en ce que** la vermiculite exfoliée a une taille de particules comprise entre 50 et 1000µm, de préférence entre 100 et 500 µm.

5. Procédé de synthèse de la composition catalytique selon l'une quelconque des revendications 1 à 5 comportant les étapes suivantes :
- exfoliation de la vermiculite par traitement d'un minerai de vermiculite à une température supérieure à 800 °C;
- mise en contact de la vermiculite exfoliée avec une solution d'un sel de Cobalt et de Fer;
- calcination de la vermiculite mise en contact avec une solution d'un sel de Cobalt et de Fer à une température supérieure à 350°C.

6. Procédé de synthèse selon la revendication 5 **caractérisé en ce que** le sel de Fer est le Fe(NO₃)₃.9H₂O.

7. Procédé de synthèse selon la revendication 5 **caractérisé en ce que** le sel de Cobalt est le Co(OAc)₂.4H₂O.

8. Procédé de synthèse selon la revendication 5 **caractérisé en ce que** la mise en contact de la vermiculite exfoliée avec une solution d'un sel de Cobalt et de Fer se fait par imprégnation par une solution aqueuse.

9. Procédé de synthèse de nanotubes de Carbone par décomposition d'un hydrocarbure gazeux sur une composition catalytique selon l'une quelconque des revendications 1 à 5 comportant les étapes suivantes :
- conditionnement de la composition catalytique sous atmosphère inerte;
- mise en contact de la composition catalytique avec une source de Carbone gazeuse à une température entre 600 et 800 °C durant au moins 5 minutes

10. Procédé de synthèse de nanotubes de Carbone selon la revendication 9 **caractérisé en ce que** l'alimentation en composition catalytique et l'extraction de nanotubes de Carbone synthétisés est continue.

11. Composite polymérique comportant des nanotubes de Carbone obtenus selon l'une quelconque des revendications 9 ou 10.
